# DEMANDE DE BREVET EUROPEEN

(11) **EP 0 863 592 A1**
(43) Date de publication de la demande: **09.09.1998**
(21) Numéro de dépôt: 98400363.2
(22) Date de dépôt: 16.02.1998
(51) Int. Cl.: H02B 1/052

(54) **Agencement d'accrochage d'un module d'appareillage électrique sur un rail support et module associé**

(30) Priorité: 28.02.1997 FR 9702373
(71) Demandeur: ENTRELEC SA, 69627 Villeurbanne Cedex (FR)
(72) Inventeur: Bechaz, Bernard, 69627 Caluire (FR); Doutaz, Luc, 69500 Bron (FR); France, Philippe, 42140 Chazelles/Lyon (FR)
(74) Mandataire: Schaub, Bernard

(57) **Abrégé**

Agencement d'accrochage d'un module d'appareillage électrique et/ou électro-optique sur un rail de support (1), comportant une première partie rigide formant crochet (5) destinée à s'accrocher à une première bordure du rail, et une seconde partie formant crochet (6) qui est destinée à s'accrocher sous l'action d'une force de rappel à une seconde bordure du rail et qui est extérieurement manoeuvrable par l'intermédiaire d'une lame d'outil venant s'insérer dans un dispositif de manoeuvre formant conduit (7) qui est prévu dans l'agencement pour permettre à cette lame d'agir par effet de levier.

L'agencement comporte un dispositif de manoeuvre qui est relié à la seconde partie sur lequel il agit par l'intermédiaire d'un dispositif de transmission d'effort (15, 16, 17) qui permet de positionner ce dispositif de manoeuvre à distance de ladite seconde partie.

## Description

L'invention concerne un agencement d'accrochage d'un module de petit appareillage notamment électrique et électro-optique sur un rail de support destiné à porter un alignement de modules de ce genre. Elle concerne aussi les modules dotés de tels agencements.

Une forme classique de montage en matière d'installation notamment électrique prévoit la mise en oeuvre de rails de support réalisés sous la forme de profilés normalisés sur lesquels s'alignent des modules de petit appareillage électrique et électro-optique, notamment des modules de circuit et/ou de connexion auxquels se raccordent des fils électriques et éventuellement de fibres optiques.

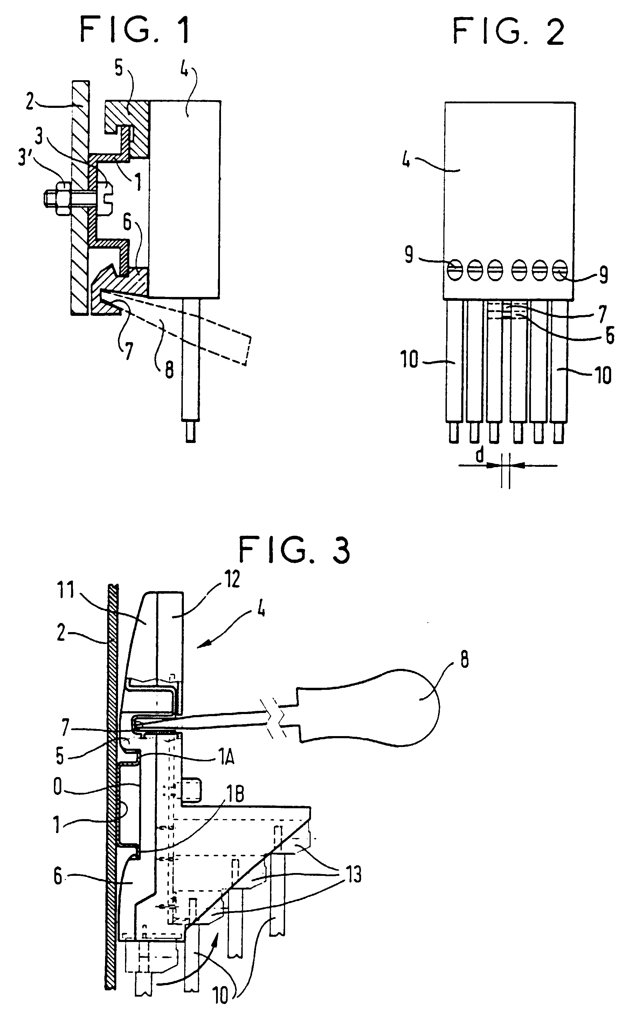

Le montage des modules sur les rails s'effectue classiquement par accrochage comme schématisé sur la figure 1 pour un rail de support 1.

Un tel rail 1 est fixé horizontalement sur au moins un élément porteur généralement vertical tel que par exemple une paroi verticale 2 d'une armoire d'appareillage ou des éléments verticaux d'un bâti non représenté, cette fixation étant symbolisée par la vis 3 et l'écrou 3' d'un boulon.

Chaque module, tel le module 4, est doté d'un agencement d'accrochage sur rail qui comporte classiquement une partie rigide 5 formant crochet réalisée de manière à venir s'immobiliser sur une bordure supérieure d'un rail horizontalement fixé et à faire supporter le poids du module par ce rail. Une partie 6, formant crochet, qui est élastiquement ou mécaniquement mobile par rapport au reste du module, vient compléter l'accrochage de ce module sur une bordure inférieure du rail et permettre suivant la position prise, soit le montage du module sur le rail ou son démontage, soit sa fixation.

La partie 6 d'un module comporte souvent une forme, par exemple un conduit borgne, tel 7, qui permet d'introduire l'extrémité 8 d'une lame d'outil, classiquement une lame de tournevis et d'agir au moyen de cette lame par un effet de levier, pour mouvoir la partie 6 en forme de crochet d'une première position à une seconde position et éventuellement en sens inverse, lorsque la partie 6 n'est pas élastiquement ramenée en une position donnée.

L'embouchure du conduit borgne 7 pour lame d'outil d'un module est généralement placée en bordure du module ainsi qu'on le voit notamment sur la figure unique du document FR-A-2708385 et elle s'ouvre vers l'avant du module lorsque celui-ci est monté sur le rail de manière à permettre une introduction d'une lame d'outil quels que soient les objets ou parois susceptibles d'être placés au voisinage du module une fois que celui-ci est en place sur le rail, généralement en bordure ou entre d'autres modules. En effet dans de nombreux cas, il est nécessaire de permettre un accès à un module au niveau d'au moins une de ses faces, ici considérée comme étant une face avant, pour permettre une éventuelle intervention, sans avoir à démonter ce module et ce qui est éventuellement relié à lui, notamment les fils et/ou fibres qui s'y raccordent.

Toutefois, il existe de nombreux cas où il peut être impossible d'accéder à l'embouchure du conduit pour lame d'outil d'un module après raccordement des fils ou fibres venant se raccorder à ce module, ainsi que schématisé sur la figure 2.

En effet si le module 4 présenté en figure 1 comporte un alignement de bornes de connexion à vis 9 ayant leurs têtes accessibles en face avant, celle-ci étant vue de dessus sur la figure 2, et recevant des fils 10 venant se raccorder plus ou moins en parallèle à ces bornes, comme montré à droite du module, il peut être difficile, voire impossible, d'introduire, au travers de la nappe de fils 10, une lame d'outil dans un orifice borgne 7 ici supposé en position centrale dans la partie 6 qui le comporte

En effet, l'intervalle "d" entre fils 10 adjacents peut être trop réduit pour permettre le passage d'une tige d'outil, si les bornes alignées sont très proches l'une de l'autre comme cela est souvent nécessaire avec les modules d'appareillage envisagés.

L'invention propose donc un agencement d'accrochage pour module de petit appareillage, notamment électrique et électro-optique, se montant sur un rail de support destiné à porter un alignement de modules de ce genre.

L'agencement comporte de manière connue, une première partie rigide formant crochet destinée à s'accrocher à une première bordure du rail, préférablement supérieure dans le cas d'un rail horizontalement fixé, et une seconde partie formant crochet qui est destinée à s'accrocher sous l'action d'une force de rappel élastique à une seconde bordure du rail et qui est extérieurement manoeuvrable, au moins pour son décrochage à l'encontre de la force de rappel, par l'intermédiaire d'une lame d'outil venant s'insérer dans un dispositif de manoeuvre formant conduit prévu dans l'agencement pour permettre à cette lame d'agir par effet de levier.

Selon une caractéristique de l'invention, l'agencement d'accrochage comporte en plus un dispositif de manoeuvre qui est relié à la seconde partie sur lequel il agit par l'intermédiaire d'un dispositif de transmission d'effort qui permet notamment de positionner ce dispositif de manoeuvre à distance de ladite seconde partie au-delà de la zone d'appui du socle sur le rail par rapport à cette seconde partie.

Selon une caractéristique de l'invention, l'agencement d'accrochage comporte un dispositif de transmission d'effort qui est constitué par une pièce rigide de forme allongée reliée par des articulations d'une part au dispositif de manoeuvre et d'autre part à la seconde partie.

Selon une caractéristique de l'invention, l'agencement d'accrochage comporte une seconde partie, un dispositif de manoeuvre et un dispositif de transmission d'effort qui sont réalisés en une pièce unique en matériau moulé.

Selon une caractéristique de l'invention, l'agencement d'accrochage comporte un dispositif de manoeuvre réalisé sous la forme d'un élément tubulaire formant un conduit qui est borgne pour la lame d'outil, cet élément tubulaire étant relié d'une part au dispositif de transmission d'effort par une articulation située au voisinage du fond du conduit borgne et d'autre part à une structure rigide comportant la première partie de l'agencement par une articulation qui est située au voisinage de l'embouchure du conduit, ainsi qu'une seconde partie formant crochet comportant une surépaisseur d'encliquetage profilée d'accrochage sur une bordure de rail qui est portée par une portion de paroi libre à une extrémité où se situe la surépaisseur et qui est reliée par un arc d'articulation à la structure rigide qui comporte la première partie de l'agencement, ladite portion de paroi étant par ailleurs reliée au dispositif de transmission d'effort par une articulation située entre l'arc d'articulation et la surépaisseur du même côté de la paroi que ladite surépaisseur.

L'invention propose aussi un module d'appareillage électrique et/ou électro-optique se montant sur un rail destiné à servir de support pour un alignement de modules qui a pour caractéristique de comporter un agencement d'accrochage tel que défini ci-dessus.

Selon une caractéristique de l'invention, ce module comporte une pièce moulée unique formant socle dont fait partie l'agencement d'accrochage.

Selon une autre caractéristique de l'invention, ce module comporte une partie formant capot qui vient se positionner sur le socle, notamment au-dessus de l'embouchure du conduit que comporte le dispositif de manoeuvre et en ce que le capot comporte une ouverture permettant de manoeuvrer ce dispositif à l'aide d'un outil ayant une lame dont l'extrémité est introduite dans ledit conduit.

L'invention, ses caractéristiques et ses avantages sont précisés dans la description qui suit en liaison avec les figures évoquées ci-dessous.

La figure 1 présente un schéma en coupe montrant un agencement connu d'accrochage d'un module à un rail de support.

La figure 2 présente une vue de dessus de l'agencement présenté en figure 1.

La figure 3 présente un exemple de module d'appareillage comportant un agencement d'accrochage selon l'invention.

La figure 4 présente une vue en coupe selon IV-IV d'un socle de module tel que présenté en figure 3.

La figure 5 présente une vue de dessus du socle de module présenté en figure 4.

L'exemple de module d'appareillage 4 présenté en figure 1 est du type module de raccordement électrique et/ou électro-optique tel que l'on en trouve dans de nombreux ensembles industriels. Il est destiné à être monté sur un rail de support 1, ici supposé à profil en U de type standard, lui-même fixé horizontalement sur un support au moins approximativement vertical, ce support étant par exemple une paroi référencée 2, comme précédemment.

Le module d'appareillage 4 comporte une structure rigide formant ici un socle 11 qui est doté d'un agencement d'accrochage lui permettant de venir s'accrocher au rail de support 1. Ce module est ici supposé équipé d'un capot 12 venant se fixer sur le socle 11.

Le socle 11 se présente par exemple sous la forme d'un boîtier d'allure approximativement parallèlépipédique rectangle ouvert au niveau d'une de ses grandes faces et avec un fond dont une partie 0 est destinée à venir se plaquer sur les deux zones d'appui longitudinal 1A et 1B prévues aux extrémités du U que forme ce rail.

Divers organes sont susceptibles d'équiper le module d'appareillage 4, dans l'exemple choisi ces organes sont supposés comprendre des bornes de connexion 13 pour des fils externes 10, ces bornes étant alignées sur plusieurs étages, selon un axe d'alignement du module et donc du socle qui est parallèle à l'axe longitudinal du rail support 1 lorsque le module est monté sur un tel rail, lui-même fixé comme indiqué ci-dessus.

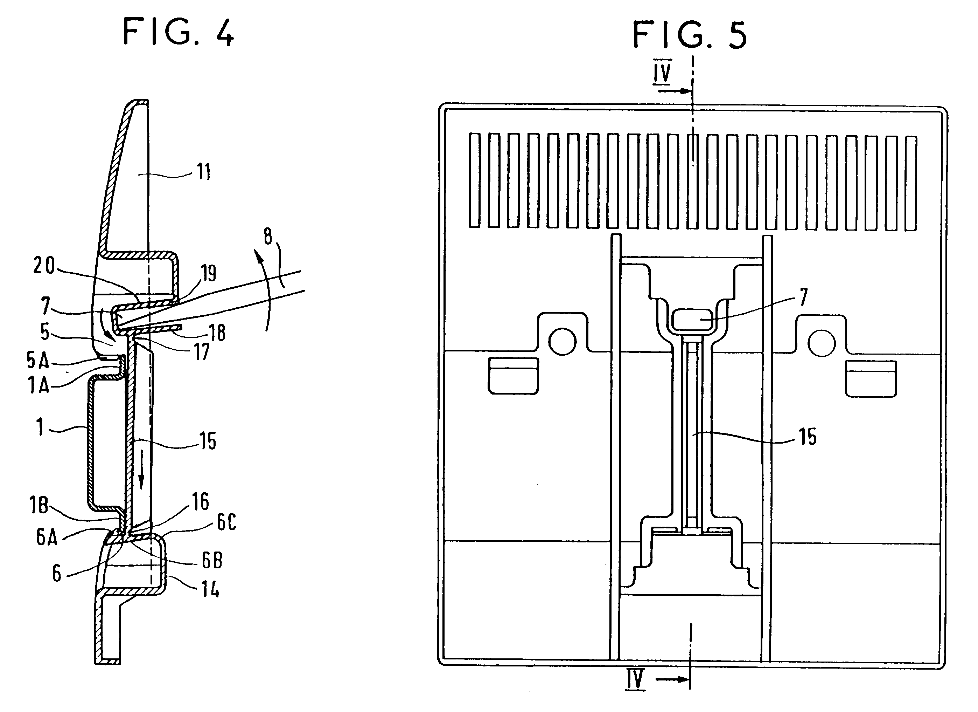

L'accrochage du module 4 par son socle 11 s'effectue de la manière classique évoquée plus haut par l'intermédiaire d'un agencement qui comporte une première partie rigide 5 formant crochet qui est ici supposée incorporée dans le socle 11 et qui est destinée à venir s'accrocher sous le poids du module et par le dessus sur une première bordure, ici supposée supérieure, du rail de support 1, ce dernier étant supposé positionné comme indiqué ci-dessus et comme montré sur la figure 4.

L'agencement d'accrochage du module 4 comporte aussi une seconde partie 6, formant un crochet, qui vient compléter l'assujettissement du socle et donc du module au rail en s'accrochant par dessous à une seconde bordure, ici la bordure longitudinale inférieure du rail, de manière à s'immobiliser sous cette bordure qu'elle enserre, sous l'action d'une force de rappel, ici supposée élastique.

La partie 6 est partiellement mobile sous l'action d'une force extérieure exercée par un outil, cette mobilité est ici supposée due à la relative élasticité de cette partie due à la forme et à la nature du matériau constituant le socle, comme cela est classique en la matière depuis de nombreuses années.

Le montage du socle sur le rail monté s'effectue de manière usuelle en venant initialement accrocher à la bordure longitudinale supérieure du rail le crochet que constitue la partie rigide 5 de ce socle, de manière que ce dernier pende en raison de son poids. La fixation s'effectue par application d'une forte pression sur le socle en direction de la paroi. Le crochet que forme la partie 6, semi-élastique, vient alors enserrer la bordure inférieure du rail où il s'encliquette, après que l'extrémité libre de ce crochet de partie 6 soit passée sous cette bordure inférieure par déformation élastique sous l'effet de la pression exercée.

Dans l'exemple de réalisation proposé, le crochet d'une partie 5 ou 6 est formé par une surépaisseur d'encliquetage profilée 5A ou 6A saillant d'une paroi de la partie 5 ou 6 considérée pour délimiter une rainure avec la paroi d'où elle saille. Cette rainure reçoit l'extrémité d'une des bordures longitudinales du rail que cette rainure alors enserre.

La désolidarisation du socle du rail sur lequel il a été préalablement fixé est obtenu par l'intermédiaire d'un dispositif de manoeuvre permettant d'exercer une force qui vient agir sur le crochet de la partie 6, au moins partiellement semi-élastique. Cette force déforme cette partie formant crochet et oblige la surépaisseur d'encliquetage à s'écarter de la bordure inférieure du rail, ce qui en permet de libérer le socle de ce rail à ce niveau. Il est alors possible de soulever le socle après l'avoir légèrement fait basculer en oblique par rapport à la paroi de manière à le libérer totalement du rail.

Selon l'invention, une portion de paroi 6B de la partie 6 d'où saille la surépaisseur d'encliquetage 6A constitue l'élément grâce auquel cette partie 6 présente une relative élasticité de manière à permettre le mouvement de la surépaisseur qui est indiqué ci-dessus.

Dans la réalisation présentée, cette portion de paroi 6B est reliée par un arc semi-élastique d'articulation 6C à une portion de paroi 14 du socle 11 avec lequel elle forme un angle qui est ici un peu inférieur à un angle droit, l'élément de paroi 14 étant au moins approximativement parallèle à la paroi 2, lorsque le socle est en place sur le rail 1. L'arc d'articulation permet une modification limitée de l'angle formé par les portions de paroi 6B et 14 et donc un déplacement limité de la surépaisseur 6A, à partir d'une position vers laquelle elle tend naturellement en raison de son élasticité.

Selon l'invention, un dispositif de transmission d'effort permet de positionner le dispositif de manoeuvre à distance de la partie 6. Ce dispositif de transmission d'effort est ici une pièce rigide de forme allongée, par exemple une tige 15. Cette tige est articulée sur la portion de paroi 6B pour permettre de déplacer cette portion de paroi par rapport à la portion de paroi 14 sur laquelle elle est articulée, en faisant varier l'angle que ces portions de paroi forment.

Dans la réalisation proposée, la tige 15 s'étend au moins à peu près parallèlement au fond du socle et orthogonalement à l'axe d'alignement de ce socle tel qu'indiqué plus haut. Elle est donc aussi orthogonalement disposée par rapport à l'axe longitudinal du rail portant le socle lorsque ce dernier est monté.

Selon l'invention, la tige 15 est positionnée dans le socle qui la comporte de manière à notamment permettre de pousser sur la portion de paroi 6B de manière à éloigner cette paroi et la surépaisseur 6A qu'elle porte de la bordure inférieure du rail 1 contre laquelle cette paroi et cette surépaisseur sont élastiquement amenés en appui, lorsque le socle est fixé sur un tel rail.

Dans l'exemple proposé, la tige 15 est moulée avec le reste du socle 11 avec lequel elle ne forme qu'une pièce et elle est reliée à la portion de paroi 6B de ce socle par une articulation 16 moulée réalisée à l'une de ses extrémités et disposée parallèlement à l'axe d'alignement du socle. Cette articulation est conçue de manière connue de l'homme de métier pour transmettre des efforts orientés selon l'axe longitudinal de la tige à la portion de paroi 6B et pour encaisser le changement d'orientation de cette tige par rapport à cette paroi lors des déplacements d'amplitude limitée prévus pour la tige.

Dans une forme de réalisation, l'articulation 16 est réalisée par un amincissement unilatéral et localisé de la tige au voisinage de la paroi 6B et de l'autre côté de la tige par rapport à la surépaisseur 6A que porte cette paroi. La tige 15 coulisse à proximité du rail de manière que les efforts soient transmis à la paroi 6B le plus près possible de la zone de cette paroi où se trouve la surépaisseur A et en conséquence le plus loin possible de l'arc d'articulation 6C de manière à augmenter le bras de levier ainsi obtenu.

La seconde extrémité de la tige 15 prend appui par une articulation 17 analogue à l'articulation 16, sur une paroi 18 d'un dispositif de manoeuvre constitué sous la forme d'un élément tubulaire délimitant un conduit borgne 7 prévu pour une extrémité d'outil comme le conduit borgne montré sur la figure 1. Le conduit borgne 7 est orienté de manière à s'ouvrir en face ouverte du boîtier que forme le socle et dans la réalisation présentée, il est disposé orthogonalement par rapport à l'axe d'alignement du socle lorsqu'il est dans une position vers laquelle il tend naturellement en raison de l'élasticité propre à une articulation 19 qui le lie au reste du socle.

Cette articulation 19 a ici une orientation parallèle à celle des articulations 16 et 18 et elle est constituée comme ces dernières. Elle est placée au niveau de l'embouchure du conduit borgne 16; de section à allure rectangulaire, sur une paroi 20 de ce conduit qui est à l'opposé de la paroi 18 portant l'articulation 17. Cette dernière est placée au voisinage du fond du conduit borgne 7 de manière que la tige 15 soit au moins approximativement parallèle au rail, comme déjà indiqué précédemment.

Avant montage du socle 11 sur un rail support, le trou borgne 7 et la paroi 6B de ce socle sont dans une position initial d'équilibre déterminée où aucune contrainte externe n'est exercée sur aucun d'eux, dans la réalisation présentée, le trou borgne est alors pratiquement orthogonal au fond 0.

La mise en place du socle 11 sur le rail support entraîne une pression de la paroi 6B contre la bordure inférieure du rail, cette pression étant créée par la réaction des articulations 6C, 16,17, 19 qui tendent toutes à revenir élastiquement à leurs positions initiales respectives.

Le déplacement du fond du trou borgne 7 du socle 11 sous l'action d'une lame d'outil agissant par effet de levier et prenant appui d'une part en fond de trou et d'autre part sur la paroi 20 à proximité de l'articulation 19, comme montré sur la figure 4. Cette action entraîne un déplacement de la tige 15 qui vient pousser la paroi 6B vers l'extérieur en raison des actions complémentaires des articulations évoquées au paragraphe précédent. Cette poussée permet de dégager de la bordure inférieure du rail le crochet formé au niveau de la partie 6 du socle et elle autorise alors le basculement de ce socle par rapport au rail et par conséquent un éventuel décrochage de ce socle.

Dans la réalisation proposée, la tige 15 tend à voir son articulation 17 s'écarter du fond 0 du socle en raison de la rotation se réalisant au niveau de l'articulation 19, lorsque la lame d'outil est mise en oeuvre comme indiqué ci-dessus, ce qui favorise l'action de dégagement de la surépaisseur 6A occasionnée par la poussée en oblique alors exercée par la tige 15 sur la paroi 6B.

Le positionnement du trou borgne 7 est choisi de manière à permettre une entrée d'outil qui soit normalement dégagée de tout passage de fil susceptible de gêner, voire d'interdire, le passage et/ou le nécessaire mouvement de cet outil, il est en conséquence prévu dans la partie centrale du socle, dans la réalisation présentée ainsi que le montre la figure 5.

Pour des raisons de dimensionnement en épaisseur, il est ici prévu au delà de la zone où se situe le fond 0 d'appui du socle sur les zones d'appui longitudinal 1A et 1B du rail 1, par rapport à la partie 6.

Lorsque le socle 11 est une des parties constitutives d'un module comportant un capot 12 qui vient se positionner sur le socle, comme montré sur la figure 3, il est prévu une ouverture 21 dans le capot pour permettre l'introduction d'une lame d'outil telle que 8 dans le conduit 7 du dispositif de manoeuvre et pour déplacer cette lame afin de manoeuvrer ce dispositif.

## Revendications

1. Agencement d'accrochage d'un module d'appareillage électrique et/ou électro-optique sur un rail de support (1) pour alignement de modules de ce genre, comportant une première partie rigide formant crochet (5) destinée à s'accrocher à une première bordure du rail, préférablement supérieure dans le cas d'un rail horizontalement fixé, et une seconde partie formant crochet (6) qui est destinée à s'accrocher sous l'action d'une force de rappel élastique à une seconde bordure du rail et qui est extérieurement manoeuvrable, au moins pour son décrochage à l'encontre de la force de rappel, par l'intermédiaire d'une lame d'outil venant s'insérer dans un dispositif de manoeuvre formant conduit (7) prévu dans l'agencement pour permettre à cette lame d'agir par effet de levier, ledit agencement étant caractérisé en ce qu'il comporte un dispositif de manoeuvre (7) qui est relié à la seconde partie sur lequel ce dispositif agit en poussée par l'intermédiaire d'un dispositif de transmission d'effort (15, 16, 17) ce qui permet notamment de positionner le dispositif de manoeuvre à distance de ladite seconde partie au-delà de la zone d'appui du socle sur le rail par rapport à cette seconde partie.

2. Agencement d'accrochage, selon la revendication 1, caractérisé en ce que le dispositif de transmission d'effort est constitué par une pièce rigide de forme allongée (15) reliée par des articulations (17, 16) d'une part au dispositif de manoeuvre et d'autre part à la seconde partie.

3. Agencement d'accrochage, selon l'une des revendications 1, 2, caractérisé en ce que la seconde partie, le dispositif de manoeuvre et le dispositif de transmission d'effort sont réalisés en une pièce unique en matériau moulé.

4. Agencement d'accrochage, selon l'une des revendications 1 à 3, caractérisé en ce qu'il comporte un dispositif de manoeuvre réalisé sous la forme d'un élément tubulaire formant un conduit (7) pour lame d'outil qui est borgne, cet élément tubulaire étant relié d'une part au dispositif de transmission d'effort (15) par une articulation (17) située au voisinage du fond du conduit borgne et d'autre part à une structure rigide comportant la première partie (5) de l'agencement par une articulation (19) qui est située au voisinage de l'embouchure du conduit, ainsi qu'une seconde partie (6) formant crochet comportant une surépaisseur d'encliquetage profilée (6A) sur une bordure de rail qui est portée par une portion de paroi (6B) libre à une extrémité où se situe la surépaisseur et qui est reliée par un arc d'articulation (6C) à la structure rigide qui comporte la première partie de l'agencement, ladite portion de paroi étant par ailleurs reliée au dispositif de transmission d'effort par une articulation (16) située entre l'arc d'articulation et la surépaisseur du même côté de la portion de paroi (6B) que ladite surépaisseur.

5. Agencement d'accrochage, selon la revendication 4, caractérisé en ce qu'il comporte un dispositif de manoeuvre dont l'élément tubulaire est relié à la structure rigide comportant la première partie de l'agencement par une articulation (19) qui est située de l'autre côté de cet élément tubulaire par rapport à l'articulation (17) reliant cet élément au dispositif de transmission d'effort.

6. Module d'appareillage électrique et/ou électro-optique se montant sur un rail destiné à servir de support pour un alignement de modules, caractérisé en ce qu'il comporte un agencement d'accrochage selon au moins l'une des revendications 1 à 5.

7. Module d'appareillage, selon la revendication 6, caractérisé en ce qu'il comporte une pièce moulée unique formant socle (11) dont fait partie l'agencement d'accrochage.

8. Module d'appareillage, selon la revendication 7, caractérisé en ce qu'il comporte une partie formant capot (12) qui vient se positionner sur le socle (11), notamment au-dessus de l'embouchure du conduit (7) que comporte le dispositif de manoeuvre et en ce que le capot comporte une ouverture (21) permettant de manoeuvrer ce dispositif à l'aide d'un outil ayant une lame (8) dont l'extrémité est introduite dans ledit conduit.
